Europäisches Patentamt

European Patent Office

Office européen des brevets

(19)

(11) Numéro de publication : **0 479 639 A1**

# (12) DEMANDE DE BREVET EUROPEEN

(21) Numéro de dépôt : **91402513.5**

(51) Int. Cl.$^5$ : **F16D 35/00**

(22) Date de dépôt : **20.09.91**

(30) Priorité : **03.10.90 FR 9012195**

(43) Date de publication de la demande :
**08.04.92 Bulletin 92/15**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Guimbretiere,Pierre**
**103 Route de St-Germain**
**78640 Neauphile-le-Chateau (FR)**

(74) Mandataire : **Moncheny, Michel et al**
**c/o Cabinet Lavoix 2 Place d'Estienne d'Orves**
**F-75441 Paris Cedex 09 (FR)**

(54) **Dispositif d'accouplement à fluide visqueux à caractéristique variable.**

(57)   L'invention concerne un dispositif d'accouplement ou viscocoupleur, comprenant deux organes rotatifs concentriques (10, 20), respectivement d'entrée et de sortie, qui délimitent entre eux une enceinte étanche (30) contenant un fluide visqueux et qui sont chacun solidaire en rotation d'une série de disques (12, 22), noyés au moins en partie dans le fluide visqueux, les disques d'une série étant alternés avec les disques de l'autre série. Ce dispositif a une caractéristique (ou loi de variation du couple en fonction de la différence de vitesse entre ses organes d'entrée et de sortie) qui est modifiée en fonction du couple transmis par le dispositif lui-même.

EP 0 479 639 A1

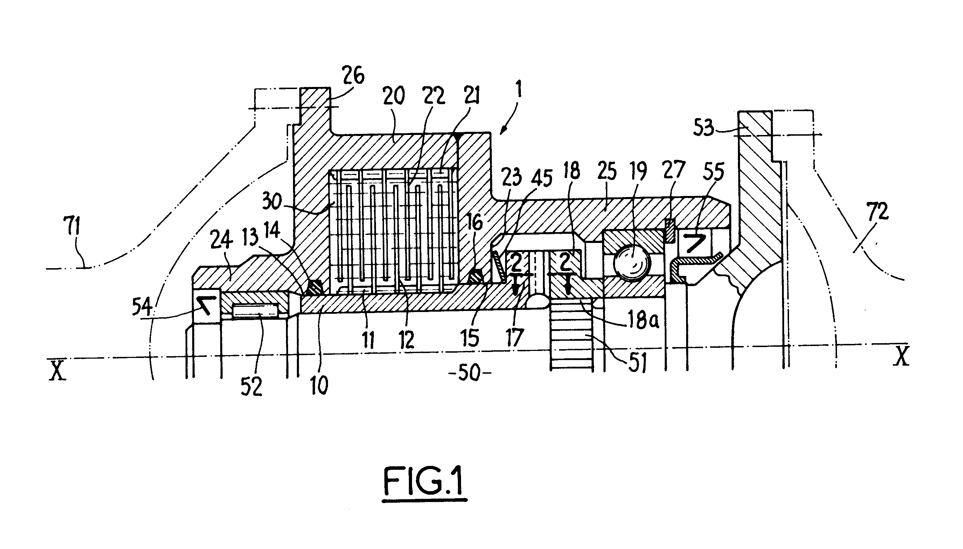

<u>FIG.1</u>

La présente invention concerne les dispositifs d'accouplement à fluide visqueux, désignés souvent par le terme viscocoupleur.

Un tel dispositif comprend deux organes rotatifs concentriques, respectivement d'entrée et de sortie, dont l'un constitue un carter et l'autre un moyeu, qui délimitent entre eux une enceinte étanche contenant un fluide visqueux et qui sont chacun solidaire en rotation d'une série de disques, noyés au moins en partie dans le fluide visqueux, les disques d'une série étant alternés avec les disques de l'autre série.

Dans un tel dispositif, le couple transmis de l'organe d'entrée à l'organe de sortie est fonction de la différence entre les vitesses de rotation de ces deux organes et l'on désigne par l'expression "caractéristique de l'accouplement" la loi reliant le couple transmis C à la différence de vitesse $\Delta$ N.

Cette caractéristique dépend d'un certain nombre de paramètres tels que : viscosité et indice de viscosité du fluide utilisé, nombre de disques, diamètres extérieur et intérieur des disques, distance entre ces disques, taux de remplissage en fluide de l'enceinte délimitée entre les deux organes, etc ... Certains de ces paramètres, par exemple le nombre et les caractéristiques dimensionnelles des disques sont invariables lors de l'utilisation. D'autres peuvent par contre varier, volontairement ou involontairement, et peuvent alors faire l'objet d'une commande afin de modifier la caractéristique de fonctionnement du dispositif d'accouplement.

C'est ainsi que l'on connaît des agencements dans lesquels la caractéristique de fonctionnement d'un viscocoupleur est modifiée par une commande extérieure comportant le cas échéant un microprocesseur de traitement de l'information, en fonction de divers paramètres de fonctionnement du véhicule tels que la vitesse des roues, la vitesse de braquage du volant ou autres.

Dans un tel état de la technique, les moyens mis en jeu sont complexes et donc difficiles à implanter et coûteux.

On connait aussi des dispositifs du même type, dont l'organe formant carter est réalisé en au moins deux parties, mobiles axialement l'une par rapport à l'autre, de façon à faire varier les caractéristiques de fonctionnement de l'accouplement. Cependant, un tel agencement, d'une part, est compliqué puisque le carter est lui-même complexe, et d'autre part, il modifie simultanément le volume de l'enceinte et l'écartement entre les disques, ce qui ne permet pas de jouer de façon distincte et avec précision sur ces deux paramètres.

L'objectif recherché ici est de réaliser un dispositif d'accouplement à fluide visqueux dont la caractéristique de fonctionnement puisse varier, en utilisation, ce résultat devant être obtenu par des moyens particulièrement simples et fiables.

A cet effet l'invention a pour objet un dispositif d'accouplement à fluide visqueux tel que défini ci-dessus, caractérisé en ce que l'organe formant carter a un volume interne fixe et il est prévu des moyens adaptés pour modifier la caractéristique de fonctionnement C = f ($\Delta$ N) du dispositif en fonction du couple qu'il transmet.

Suivant d'autres caractéristiques :

- l'un des deux organes d'entrée ou de sortie est monté mobile axialement sur une course limitée sous l'effet d'un couple, et le déplacement axial de cet organe est utilisé pour modifier au moins un des paramètres de fonctionnement du dispositif d'accouplement;

– l'un des deux organes d'entrée ou de sortie est réalisé en deux parties dont l'une est montée mobile axialement, tandis que l'autre est fixe axialement, ces deux parties étant munies de surfaces complémentaires formant rampes, de sorte que sous l'effet d'un couple, un débattement angulaire tend à se produire entre lesdites parties, provoquant un déplacement axial de la partie mobile;

– l'un des deux organes d'entrée ou de sortie est réalisé en trois parties la première et la troisième étant fixes axialement alors que la deuxième partie, servant d'intermédiaire entre la première et la troisième partie, est montée mobile axialement; il est alors prévu que la deuxième partie est montée par cannelures coulissantes sur la première partie tandis que la deuxième partie et la troisième partie sont munies de surfaces complémentaires formant rampes de sorte que sous l'effet d'un couple, un débattement angulaire tend à se produire entre lesdites parties provoquant alors un déplacement axial de la partie intermédiaire mobile qui agit sur le viscocoupleur;

– il est prévu au moins deux jeux de surfaces complémentaires entre deux des pièces constituant lesdites parties, qui interviennent respectivement lorsque le dispositif transmet des couples de sens opposés, et qui présentent des caractéristiques d'inclinaison différentes.

L'invention a également pour objet un dispositif de transmission, notamment pour véhicule automobile, auquel est incorporé au moins un dispositif d'accouplement à fluide visqueux tel que perfectionné selon l'invention.

Cette dernière va être décrite plus en détail ci-dessous en se référant aux dessins annexés donnés uniquement à titre d'exemples et sur lesquels :

La Fig. 1 est une vue en coupe longitudinale d'un dispositif d'accouplement perfectionné selon l'invention;

La Fig. 2 est une vue en coupe suivant la ligne 2-2 de la Fig. 1;

Les Fig. 3 et 4 sont deux vues partielles en coupe de deux variantes de réalisation;

Les Fig. 5 à 8 sont des vues en coupe longitudinale illustrant quatre applications possibles d'un dispositif selon l'invention; et

Les Fig. 9 à 13 représentent quelque peu schématiquement d'autres variantes.

On a représenté à la Fig. 1 un dispositif 1 d'accouplement à fluide visqueux comprenant un moyeu 10 et un carter 20 concentriques d'axe X-X délimitant entre eux une enceinte étanche 30 dans laquelle est reçu un fluide visqueux qui peut être par exemple une huile silicone. Le carter est réalisé d'un seul tenant et possède un volume interne fixe. L'expression d'un seul tenant signifie ici que ce carter est soit réalisé en une seule pièce, soit constitué de plusieurs pièces fixes les unes par rapport aux autres.

Le moyeu et le carter comportent des cannelures 11, 21 ménagées dans leurs faces cylindriques en regard et sur ces cannelures sont respectivement en prise deux séries de disques alternés 12, 22 qui sont donc respectivement solidaires en rotation du moyeu et du carter. Le nombre et les dimensions de ces disques, ainsi que les intervalles ménagés entre eux, le fluide visqueux, le taux de remplissage de l'enceinte, etc ... sont choisis de façon à procurer au dispositif d'accouplement les caractéristiques souhaitées.

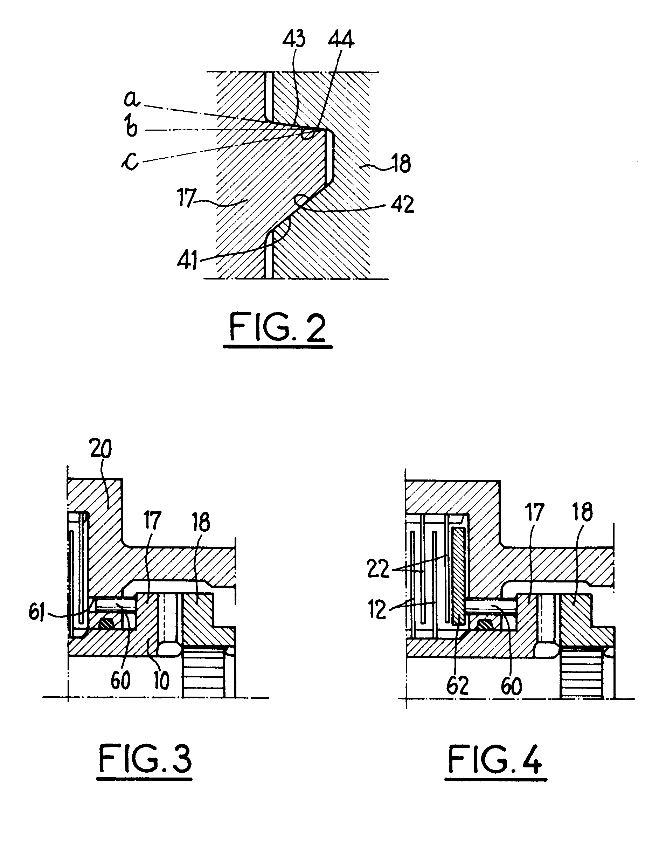

Le moyeu 10 comporte à partir de son extrémité de gauche en regardant la Fig. 1, une portée 13 coopérant avec un joint d'étanchéité 14 reçu dans un logement du carter, puis la partie cannelée 11 recevant les disques 12, puis une portion non cannelée 15 délimitant également une portée pour un second joint d'étanchéité 16 et enfin une collerette radiale 17 disposée dans le prolongement d'un manchon 18 cannelé intérieurement en 18ᵃ et qui vient en appui axial contre un roulement 19. Dans les faces en regard de la collerette 17 et du manchon 18 sont ménagés des jeux de rampes dont la forme est mieux visible sur la Fig. 2.

Un premier jeu de rampes 41, 42 intervient lorsque le dispositif d'accouplement doit transmettre un couple moteur, tandis que le deuxième jeu 43, 44 est sollicité lorsque le dispositif transmet un couple de freinage.

Comme représenté respectivement en trait plein et en trait mixte sur la Fig. 2, ce deuxième jeu de rampes peut avoir par rapport à la direction axiale X-X une inclinaison dans le même sens que celle des rampes 41, 42(c), une inclinaison nulle (b) ou une inclinaison de sens opposé à celui des rampes 41, 42(a).

Un ressort de rappel 45 constitué par une rondelle Belleville est interposé entre la face arrière de la collerette 17 et la face adjacente 23 du carter.

Le manchon cannelé 18 est destiné à coopérer avec un arbre central 50 comportant des cannelures complémentaires 51 et monté rotatif par rapport au moyeu 10 du dispositif d'accouplement, en étant reçu dans des roulements 52, 19 eux-mêmes portés par des prolongements latéraux 24 et 25 du carter. L'arbre central 50 porte à une extrémité un flasque 53 permettant de le fixer sur tout organe convenable. De même le carter 20 comporte des moyens 26 de fixation sur un deuxième organe, faisant partie d'une transmission auquel le dispositif doit être incorporé.

Le roulement 19 est maintenu dans le prolongement du carter par un jonc élastique 27 et des moyens d'étanchéité 54, 55 sont bien entendu prévus entre le carter et l'arbre central.

Le fonctionnement d'un tel dispositif est le suivant :

Le couple transmis dans un sens ou dans l'autre entre le moyeu et le carter est également transmis entre le manchon et le moyeu, par l'intermédiaire des jeux de rampes 41, 42, 43, 44. Sous l'effet d'un couple, par exemple moteur, mettant en jeu les rampes 41 et 42, un débattement angulaire tend à se produire entre le manchon 18 et le moyeu 10 et ce débattement angulaire provoque un déplacement axial du moyeu, à l'encontre de l'action du ressort 45. Lors de ce déplacement axial vers la gauche en considérant la Fig. 1, la partie 15 de section plus importante du moyeu 10 pénètre dans l'enceinte 30, ce qui se traduit par une diminution du volume de cette enceinte et donc par une modification de la pression intérieure du fluide qui y est contenu. Cette variation de pression a une incidence sur la caractéristique du dispositif d'accouplement et la variation de caractéristique s'effectue en fonction de la valeur même du couple transmis par le dispositif. Ce résultat est obtenu sans modifier l'écartement entre les disques.

Bien entendu la loi de variation obtenue dépend de l'inclinaison des rampes 41, 42 qui est choisie en fonction du résultat recherché.

Lorsque le couple appliqué est de sens inverse, s'agissant par exemple d'un couple de freinage, ce sont les jeux de rampes 43 et 44 qui interviennent, avec pour effet soit de modifier la caractéristique de fonctionnement du viscocoupleur selon une loi différente si les rampes présentent une certaine inclinaison (cas a et c), soit de conserver une caractéristique de base déterminée, si les jeux de rampes sont parallèles à l'axe X-X comme représenté en b.

On a représenté à la Fig. 3 une variante de réalisation d'un dispositif d'accouplement selon l'invention, dans laquelle le moyeu mobile 10 agit par sa collerette 17 sur au moins une navette 60 reçue dans un perçage 61 du carter, qui débouche dans l'enceinte du viscocoupleur.

Cette navette peut agir par modification du volume de l'enceinte du viscocoupleur (Fig. 3) et/ou par action sur un plateau 62 agissant pour modifier l'écartement entre les disques 12 et 22, comme représenté à la Fig. 4.

Le principe du fonctionnement exposé ci-dessus demeure toutefois le même et le carter n'est pas sensiblement modifié par rapport à celui d'un viscocoupleur classique.

Dans une première application (Fig. 1), le dispositif d'accouplement perfectionné selon l'invention peut être interposé dans une transmission longitudinale de véhicule automobile à deux essieux moteurs. Dans ce cas le carter 20 du viscocoupleur est relié à un premier tronçon d'arbre de transmission 71 lui-même entraîné par un groupe moto-propulseur dispsé à l'avant du véhicule, tandis que l'arbre central 50 est relié à un deuxième tronçon d'arbre longitudinal 72 qui attaque, de façon classique, le différentiel d'un essieu arrière.

Dans un tel agencement, lorsque le dispositif d'accouplement transmet un couple moteur du groupe moto-propulseur vers l'essieu arrière, la caractéristique du viscocoupleur se trouve renforcée au fur et à mesure que le couple qu'il transmet augmente, ce qui est bien entendu favorable.

Par contre en frein moteur, on retrouve la caractéristique de base du viscocoupleur ou une caractéristique voisine, fonction de la pente des rampes 43 et 44.

Le fait que les caractéristiques soient différentes, selon que l'on fonctionne sous couple moteur ou sous couple de freinage, a pour autre conséquence favorable de ne pas perturber le fonctionnement d'un dispositif de freinage muni de moyens d'anti-blocage des roues.

Il est à noter aussi que le perfectionnement selon l'invention autorise le phénomène de blocage du viscocoupleur sous l'effet d'une augmentation de pression résultant elle-même d'une augmentation de température, ce phénomène étant souvent recherché pour permettre des démarrages dans des conditions limites de faible adhérence.

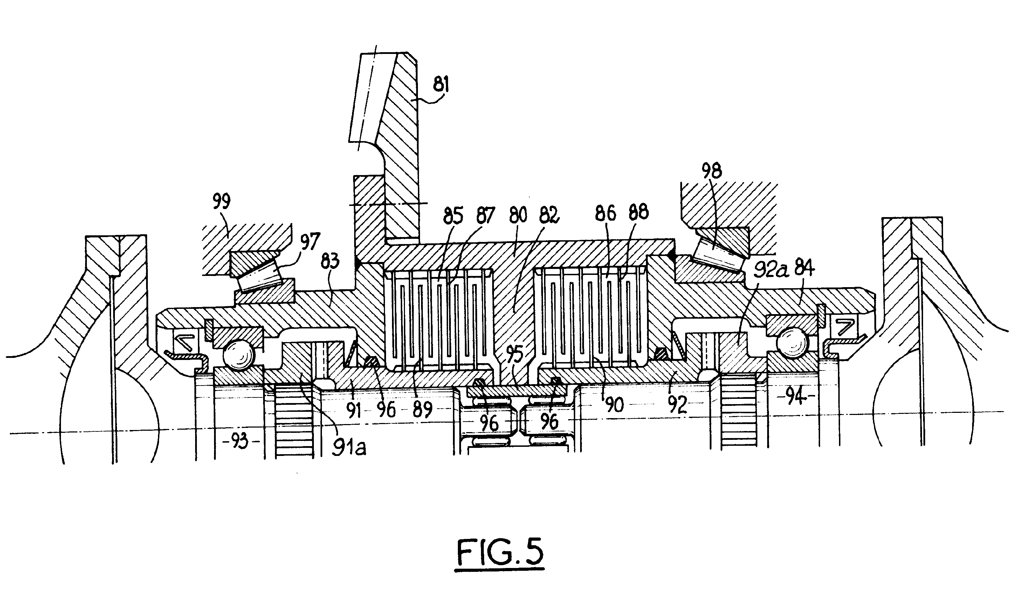

Dans le mode de réalisation représenté à la Fig. 5, un dispositif suivant l'invention est utilisé en remplacement du différentiel dans un pont arrière d'un véhicule à quatre roues motrices. A cet effet le dispositif d'accouplement est double, le carter 80 solidaire d'une couronne dentée 81 attaquée de façon connue par un pignon conique (non représenté), comporte une paroi centrale 82 et deux prolongements latéraux 83, 84. Le carter 80 délimite deux enceintes 85, 86 de volumes fixes, dans chacune desquelles sont disposées deux séries de disques alternés 87, 88 et 89, 90 respectivement solidaires du boîtier et d'un moyeu 91, 92. Chaque moyeu est réalisé en deux parties 91, 91ᵃ, 92, 92ᵃ comme décrit à propos de la Fig. 1 et associé à un arbre de sortie respectif 93, 94, relié à un demi-arbre de transmission vers les roues arrière. Dans la partie centrale du dispositif, les extrémités des deux arbres 93, 94 sont reçues dans un roulement double 95 dont la bague extérieure est emmanchée à force dans la paroi 82 et des joints d'étanchéité 96 sont prévus entre les moyeux, d'une part, et le carter et la bague du roulement 95, d'autre part.

Les deux prolongements latéraux 83, 84 du carter sont par ailleurs montés par des paliers 97, 98 dans un carter de pont arrière 99.

Dans une telle configuration, le viscocoupleur double fait office de différentiel et la caractéristique de chaque viscocoupleur élémentaire associé à un arbre de roue varie en fonction du couple transmis par ce viscocoupleur et par conséquent en fonction des conditions réelles de fonctionnement de chacune des roues.

Bien entendu, un tel agencement n'est pas limité à deux organes de sortie, un nombre supérieur de sorties pouvant être prévu à partir d'une seule entrée.

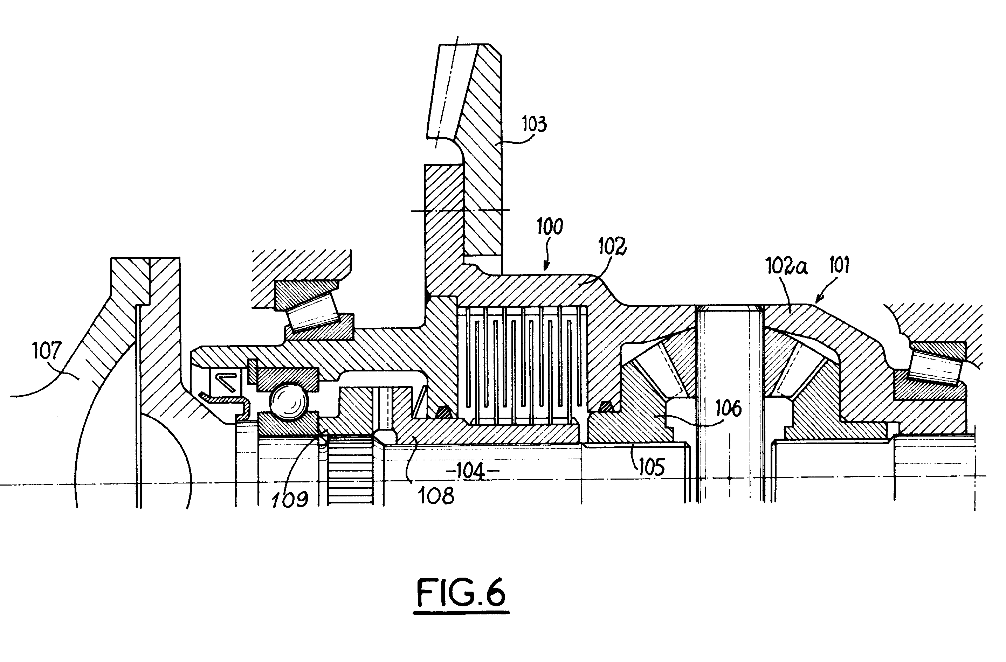

Dans le mode de réalisation représenté à la Fig. 6, un dispositif 100 suivant l'invention est incorporé ou associé à un différentiel 101 qui peut être un différentiel avant, arrière ou central. Le carter 102 du dispositif d'accouplement est solidaire du carter 102ᵃ du différentiel et porte une couronne 103 attaquée de façon classique par un pignon conique. L'arbre central 104 du dispositif d'accouplement est relié par des cannelures 105 à l'un 106 des planétaires du mécanisme différentiel et il est relié par ailleurs à un demi-arbre de roue 107 et au moyeu 108, 109 du dispositif d'accouplement à fluide visqueux. Ce dernier est donc interposé entre l'organe d'entrée et l'un des deux organes de sortie du différentiel, suivant une disposition par ailleurs connue.

Cependant, le fait que le dispositif d'accouplement soit commandé de façon autonome ou auto-piloté en fonction du couple qu'il transmet offre des avantages notables par rapport aux dispositifs classiques de blocage total ou partiel du différentiel.

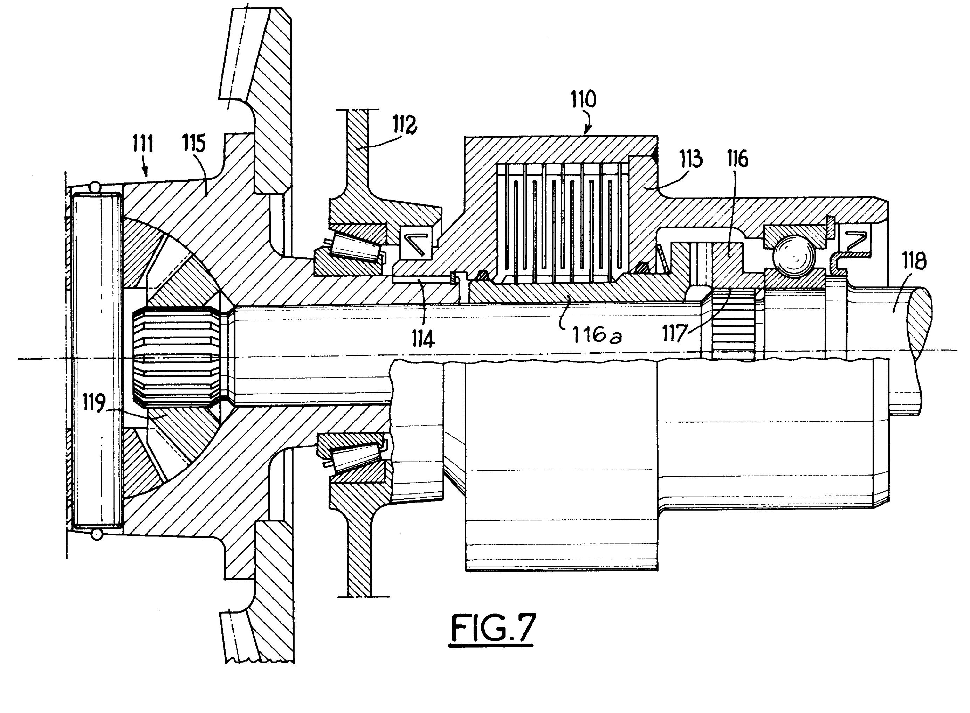

Dans le mode de réalisation représenté à la Fig. 7, un dispositif d'accouplement à fluide visqueux 110 selon l'invention est associé à un différentiel 111 mais en étant disposé à l'extérieur du carter 112 renfermant ce dernier. Une telle disposition est décrite d'une façon générale dans le brevet FR-A-2 604 232. Comme dans les exemples précédents, le dispositif d'accouplement est réalisé de façon à présenter une caractéristique variant en fonction du couple qu'il transmet. Son carter 113 est relié par des cannelures 114 au boîtier 115 du différentiel tandis que le manchon 116 associé au moyeu 116ᵃ est relié par des cannelures 117 à un arbre 118 lui-même solidaire en rotation de l'un 119 des planétaires, qui constitue l'un des organes de sortie du différentiel.

Le fonctionnement et les avantages obtenus sont de même nature que ceux déjà exposés ci-dessus.

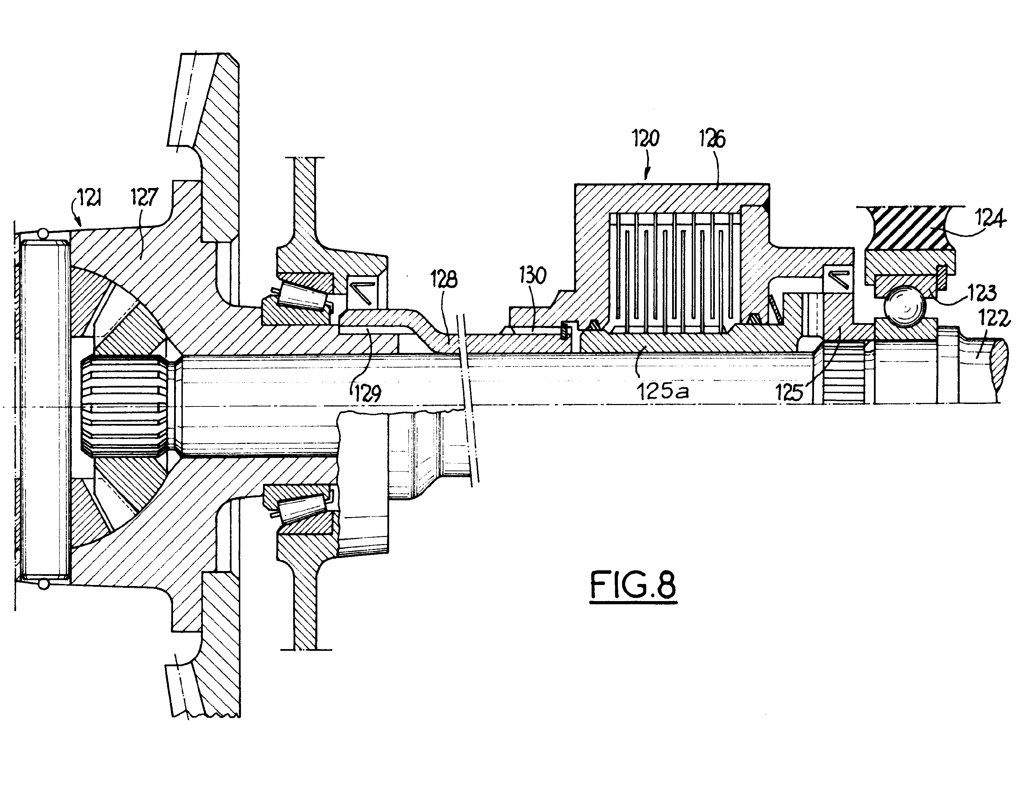

De même, dans la Fig. 8 un dispositif d'accouplement 120 conforme à l'invention est associé à un différentiel 121 en étant disposé à l'extérieur et à une certaine distance de celui-ci. Cette disposition correspond au cas où le différentiel n'est pas situé à égale distance des deux roues qu'il entraîne et où l'arbre de roue le plus long 122 est supporté en un point intermédiaire de sa longueur par un palier 123 qui peut être relié à la structure du véhicule par un montage élastique 124. Dans ce cas le dispositif d'accouplement est de préférence disposé immédiatement au voisinage de ce palier, le manchon 125 associé au moyeu 125ᵃ venant en butée axiale contre la bague interne dudit palier. Par ailleurs le carter 126 du dispositif d'accouplement est relié au boîtier 127 du différentiel par un arbre creux 128 s'étendant concentriquement autour de l'arbre 122 et comportant à ses deux extrémités des cannelures 129, 130 coopérant avec des cannelures respectives du boîtier 127 et du carter 126.

Là encore le fonctionnement de ce dispositif est analogue à celui décrit à propos de modes de réalisation précédents et les avantages obtenus sont comparables.

De nombreuses variantes ou applications peuvent être envisagées sans pour autant sortir du cadre de cette invention.

En particulier, les moyens réalisant l'auto-pilotage du dispositif peuvent être associés au carter de ce dernier et non au moyeu; les rampes qui transforment le déplacement augulaire relatif entre les deux parties constituant l'un des organes d'entrée et de sortie du dispositif peuvent être ménagées dans des surfaces axiales en regard de ces deux parties, au lieu d'être situées sur des surfaces radiales; des éléments de roulement peuvent être prévus entre les rampes.

Par ailleurs, ce dispositif peut être combiné à des moyens extérieurs de commande, tels que déjà utilisés dans la technique antérieure afin de réaliser une variation optimale de sa caractéristique.

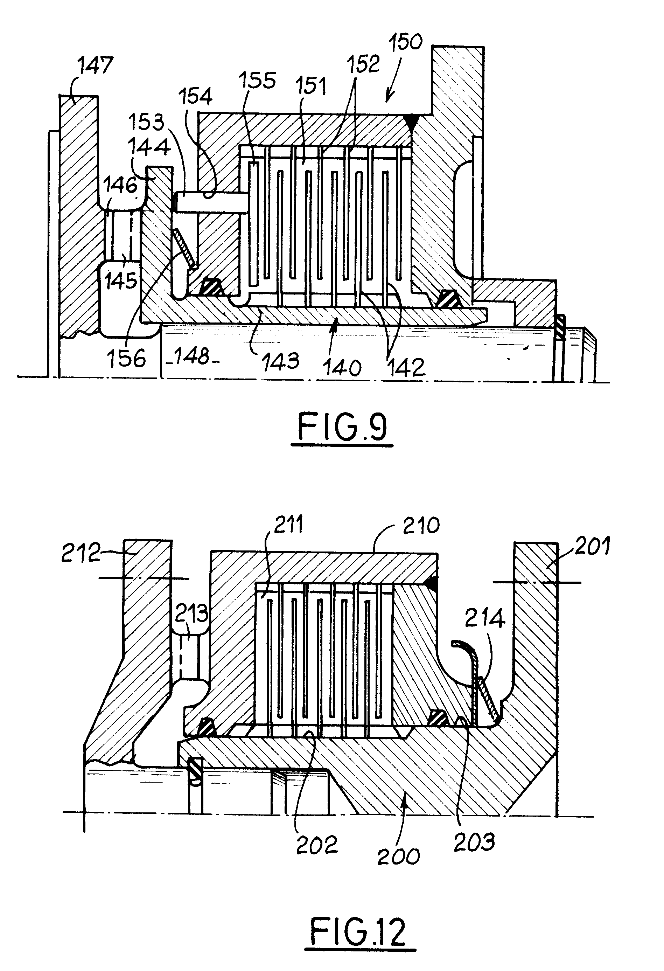

Plusieurs variantes sont représentées aux Figures 9 à 13 et vont être décrites sommairement ci-après.

Tel que représenté sur la Figure 9, le dispositif comprend un moyeu 140 et un carter 150 délimitant une enceinte 151 dans laquelle sont disposées les deux séries de disques 142, 152.

Le moyeu comporte une partie axiale 143 délimitant les cannelures recevant les disques, et une partie radiale 144 portant à sa partie extérieure des rampes 145 coopérant avec des rampes complémentaires 146 portées par un flasque radial 147 solidaire d'un tronçon d'arbre 148 reçu à l'intérieur du moyeu. Ce tronçon d'arbre peut constituer un organe d'entrée pour le dispositif.

Sur son autre face, la partie radiale 144 du moyeu est en appui contre au moins une navette 153 reçue dans un alésage 154 du carter et qui est en appui à son autre extrémité contre un plateau 155 monté coulissant à l'intérieur de ce dernier.

Un ressort de rappel 156 est interposé entre le moyeu 140 et le carter 150.

Dans ce cas, la variation de la caractéristique de fonctionnement de l'accouplement, en fonction du couple transmis est obtenue par modification de l'écartement entre les disques, au moyen du plateau 155 actionné par la ou les navettes 153. Le volume de l'enceinte 151 n'est que peu modifié par les déplacements de la navette ou des navettes 153.

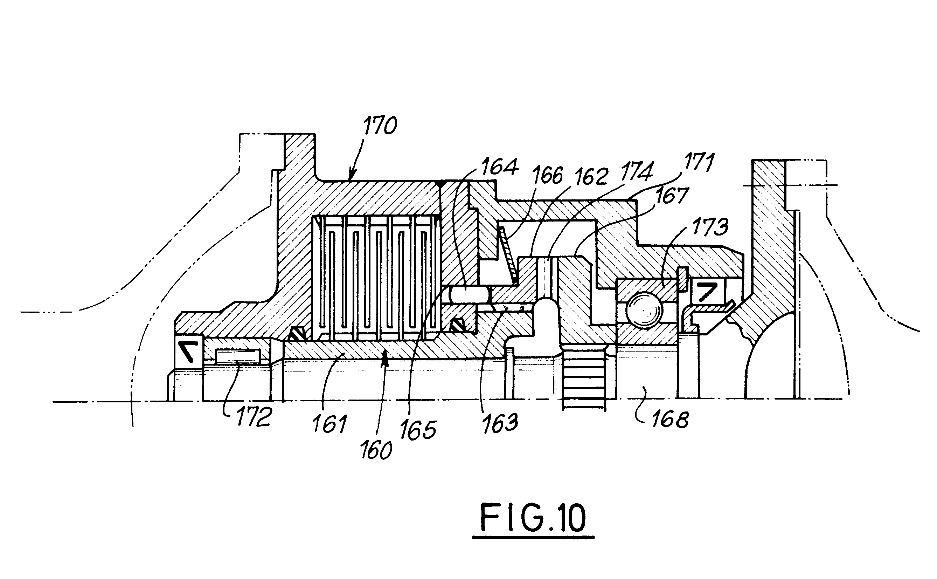

Dans le mode de réalisation de la Figure 10, le moyeu 160 du dispositif d'accouplement est réalisé en trois parties :

– une première partie 161 constituant le moyeu proprement dit et délimitant les cannelures sur lesquelles sont reçus les disques solidaires en rotation du moyeu;

– une deuxième partie ou partie intermédiaire 162 disposée radialement à l'extérieur de la première partie et reliée à cette dernière par des cannelures longitudinales 163. Cette partie intermédiaire est en appui sur sa face dirigée vers le carter 170 sur au moins une navette 164 reçue dans un alésage 165 dudit carter. Elle est également en appui contre un ressort de rappel 166 constitué ici par une rondelle Belleville, interposée entre cette deuxième partie et la partie adjacente du carter;

– une troisième partie 167 solidaire en rotation d'un tronçon d'arbre 168 qui peut constituer l'organe de sortie du dispositif et qui est monté rotatif par rapport au carter 170 et à un carter supplémentaire 171, par l'intermédiaire de roulements 172 et 173. Cette troisième partie ainsi que la partie intermédiaire comportent sur leurs faces en regard des rampes complémentaires 174 destinées à provoquer un déplacement axial de ladite partie intermédiaire sous l'effet du couple qui transite entre la deuxième et la troisième partie constituant le moyeu.

Dans ce mode de réalisation comme dans les précédents, le carter 170 du dispositif d'accouplement à fluide est réalisé d'un seul tenant et délimite un volume constant. La variation de caractéristiques de fonctionnement du viscocoupleur est obtenue en agissant par l'intermédiaire de la deuxième partie du moyeu, sur la ou les navettes 164 qui modifie(nt) le volume que peut occuper le fluide visqueux à l'intérieur de l'enceinte délimitée par le carter 170 et la première partie 161 du moyeu.

Dans ce mode de réalisation, les première et troisième parties 160, 167 du moyeu sont fixes axialement et c'est la partie intermédiaire 162 de ce dernier qui se déplace pour modifier la caractéristique de fonctionnement du viscocoupleur.

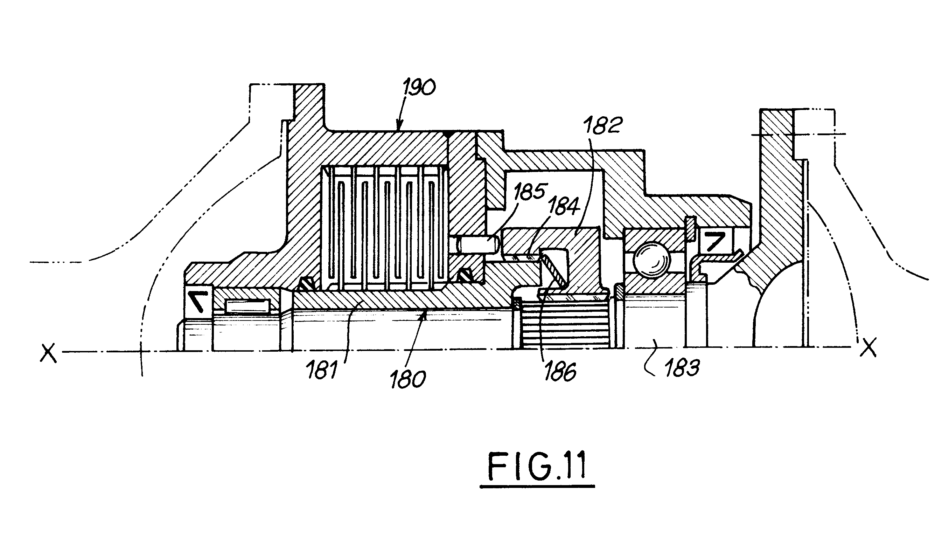

Dans le mode de réalisation de la Figure 11, qui diffère assez peu de celui de la Figure 10, le moyeu 180 est réalisé en deux parties, à savoir une première partie 181 délimitant les cannelures recevant les disques du viscocoupleur et une deuxième partie 182 reliée par des cannelures à un arbre 183. Les deux parties constituant le moyeu sont reliées entre elles par des rampes 184 orientées obliquement par rapport à l'axe X-X du dispositif, de sorte que la première partie du moyeu étant fixe axialement et la seconde pouvant se déplacer, l'amplitude de ce déplacement est déterminée par le couple transmis au niveau des rampes 184. La deuxième partie du moyeu agit alors lors de son déplacement sur des navettes 185 montées coulissantes dans des alésages du carter 190. Un ressort de rappel 186 est prévu entre les deux parties du moyeu, qui tend à éloigner la deuxième partie 182 de ce dernier.

Dans le mode de réalisation de la Figure 12, le moyeu 200 du dispositif d'accouplement est solidaire d'un flasque 201 pouvant être relié par exemple à un organe de sortie. Ce moyeu comporte deux parties 202, 203 de diamètre différent. Il est entouré par un carter 210 réalisé d'un seul tenant et de volume fixe, ce carter et le moyeu délimitant une enceinte 211 dans laquelle sont disposées deux séries de disques alternés.

Le carter 210 est mobile axialement par rapport au moyeu. Il est rendu solidaire en rotation d'un flasque 212 qui peut constituer un organe d'entrée pour le dispositif et qui est lui-même centré et maintenu axialement par rapport au moyeu 200. Un jeu de rampes 213 est prévu entre le flasque 212 et le carter, pour d'une part réaliser la liaison en rotation entre ces deux pièces et d'autre part solliciter axialement le carter en fonction du couple transmis. Un ressort de rappel 214 est prévu entre le carter et la partie adjacente du moyeu. Lors du déplacement axial du carter 210, le volume de l'enceinte 211 varie sous l'effet de la pénétration plus ou moins importante de la portion 203 de plus grand diamètre, du moyeu 200, dans le carter 210.

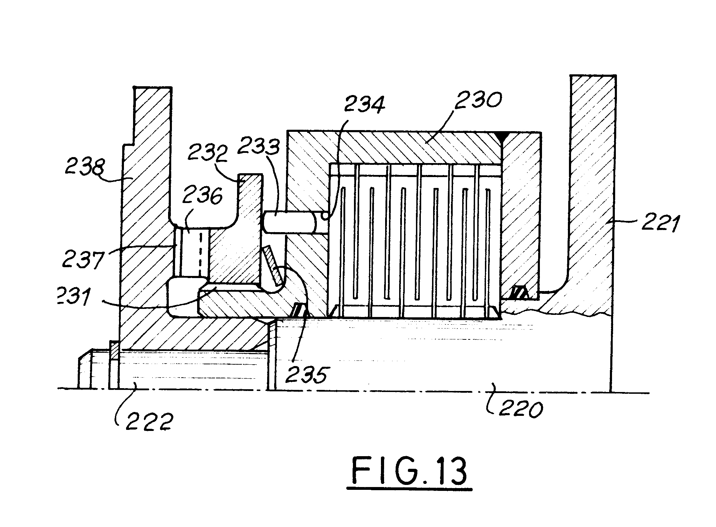

Enfin, dans le mode de réalisation de la Figure 13, le moyeu 220 et le carter 230 sont fixes axialement l'un par rapport à l'autre. Le moyeu est solidaire d'un flasque radial 221 pouvant être relié par exemple à un organe de sortie.

Le carter est quant à lui relié par des cannelures 231 à un organe intermédiaire 232 monté coulissant et qui est en appui par sa face dirigée vers le carter contre au moins une navette 233 reçue dans un alésage 234 du carter. Un ressort 235 est interposé entre cette même face de l'organe intermédiaire et la partie adjacente du carter.

Sur son autre face, l'organe intermédiaire 232 comporte des rampes 236 coopérant avec des rampes complémentaires 237 portées par un organe 238 qui peut constituer un organe d'entrée et qui est monté rotatif sur un prolongement 222 du moyeu.

Dans ce cas, le carter et le moyeu sont fixes et la modification de caractéristique du dispositif est obtenue en modifiant le volume disponible pour le fluide à l'intérieur du viscocoupleur, au moyen de l'organe intermédiaire 232 qui se déplace sous l'effet du couple transitant par le dispositif et qui agit sur les navettes 233.

## Revendications

1. Dispositif d'accouplement à fluide visqueux, comprenant deux organes rotatifs concentriques (10p 20; 91, 92, 80, 83, 84; 108, 102; 116$^a$, 113; 125$^a$, 126; 140; 150; 160; 170; 180, 190; 200, 210; 220, 230) respectivement d'entrée et de sortie, dont l'un constitue un moyeu et l'autre un carter, qui délimitent entre eux une enceinte étanche (30) contenant un fluide visqueux et qui sont chacun solidaire en rotation d'une série de disques (12, 22), noyés au moins en partie dans le fluide visqueux, les disques d'une série étant alternés avec les disques de l'autre série, caractérisé en ce que l'organe formant carter a un volume interne fixe et il est prévu des moyens adaptés pour modifier la caractéristique de fonctionnement C = f ($\Delta$ N) du dispositif en fonction du couple qu'il transmet.

2. Dispositif d'accouplement suivant la revendication 1, caractérisé en ce que l'un (10; 91, 92; 108; 116$^a$; 125$^a$; 140; 162; 182; 210; 232) des deux organes d'entrée ou de sortie est monté mobile axialement sur une course limitée, sous l'effet d'un couple, et le déplacement axial de cet organe est utilisé pour modifier au moins un des paramètres de fonctionnement du dispositif d'accouplement.

3. Dispositif d'accouplement suivant la revendication 2, caractérisé en ce que ledit paramètre est le volume de l'enceinte (30) contenant le fluide visqueux et/ou la pression interne de ce fluide.

4. Dispositif d'accouplement suivant la revendication 2, caractérisé en ce que ledit paramètre est l'écartement entre les disques (12, 22).

5. Dispositif suivant l'une quelconque des revendications 1 à 4, caractérisé en ce que l'un des deux organes d'entrée ou de sortie est réalisé en au moins deux parties dont l'une (10; 91, 92; 108; 116$^a$; 125$^a$; 140; 162; 182; 210; 232) est montée mobile axialement, tandis que l'autre (18; 91$^a$, 92$^a$; 109; 116; 125; 147; 161; 181; 212; 238) est fixe axialement, ces deux parties étant munies de surfaces complémentaires (41, 42; 43, 44; 145, 146; 174; 184; 213; 236, 237) formant rampes, de sorte que sous l'effet d'un couple, un débattement angulaire tend à se produire entre lesdites parties, provoquant un déplacement axial de la partie mobile.

6. Dispositif suivant la revendication 5, caractérisé en ce que l'un des deux organes d'entrée ou de sortie est réalisé en trois parties (161, 162, 167; 230, 232, 238), la première et la troisième étant fixes axialement alors que la deuxième partie (162; 232) servant d'intermédiaire entre la première et la troisième partie, est montée mobile axialement.

7. Dispositif suivant la revendication 6, caractérisé en ce que la deuxième partie (162; 232) est montée par cannelures coulissantes sur la première partie tandis que la deuxième et la troisième partie sont munies de surfaces complémentaires formant rampes de sorte que sous l'effet d'un couple, un débattement angulaire tend à se produire entre lesdites parties provoquant alors un déplacement axial de la partie intermédiaire mobile qui agit sur le viscocoupleur.

8. Dispositif suivant la revendication 7, caractérisé en ce que la pièce intermédiaire (162; 232) comporte une collerette en appui contre au moins une navette (164; 233) reçue coulissante dans un alésage du carter.

9. Dispositif suivant la revendication 5, caractérisé en ce qu'il est prévu au moins deux jeux de surfaces complémentaires (41, 42; 43, 44) entre deux des pièces constituant lesdites parties, qui interviennent respectivement lorsque le dispositif transmet des couples de sens opposés, et qui présentent des caractéristiques d'inclinaison différentes.

10. Dispositif suivant la revendication 9, caractérisé en ce que les rampes des deux jeux de rampes sont inclinées dans le même sens mais sous des angles différents.

11. Dispositif suivant la revendication 9, caractérisé en ce que les rampes de l'un des jeux de rampes sont parallèles à l'axe du dispositif.

12. Dispositif suivant la revendication 9, caractérisé en ce que les jeux de rampes sont inclinés dans des sens opposés et sous des angles différents.

13. Dispositif suivant la revendication 5, caractérisé en ce que le moyeu est réalisé en deux parties, la partie (10) mobile axialement portant les disques (12) qui coopèrent avec les disques (22) portés par le carter (20), tandis que la partie (18) relativement fixe axialement est solidaire en rotation d'un arbre central (50).

14. Dispositif suivant la revendication 13, caractérisé en ce que la partie mobile du moyeu a une section variable suivant sa longueur.

15. Dispositif suivant la revendication 13, caractérisé en ce que la partie mobile du moyeu comporte une collerette (17) en appui contre au moins une navette (60) reçue coulissante dans un perçage (61) du carter (20).

16. Dispositif suivant la revendication 15, caractérisé en ce que ladite navette (60) coopère avec un plateau (62) monté mobile axialement dans le carter.

17. Dispositif suivant la revendication 5, caractérisé en ce que le carter (210) est monté coulissant sur le moyeu et relié par des rampes (213) à une pièce (212) elle-même mobile en rotation mais fixe axialement par rapport au moyeu (200).

18. Dispositif de transmission pour véhicule, caractérisé en ce qu'il comprend un dispositif d'accouplement suivant l'une quelconque des revendications 1 à 17.

19. Dispositif de transmission suivant la revendication 18, caractérisé en ce que le dispositif d'accouplement est interposé entre deux tronçons d'un arbre longitudinal de transmission, reliant un groupe moto propulseur à un essieu moteur.

20. Dispositif de transmission suivant la revendication 18, caractérisé en ce que le dispositif d'accouplement est double et comporte un carter unique (80) constituant un organe d'entrée et deux moyeux (91, 92) reliés à deux arbres de roue respectifs.

21. Dispositif de transmission suivant la revendication 18, caractérisé en ce que le dispositif d'accouplement (100) est associé à un différentiel (101), le carter (102) du dispositif d'accouplement étant solidaire du boîtier (102ᵃ) du différentiel, tandis que le moyeu de ce dispositif d'accouplement est relié par l'intermédiaire d'un arbre central (104) à l'un des planétaires (106) du différentiel.

22. Dispositif de transmission suivant la revendication 21, caractérisé en ce que le dispositif d'accouplement est disposé à l'extérieur du carter (112) dans lequel est logé le différentiel (111).

23. Dispositif de transmission suivant la revendication 22, caractérisé en ce que le différentiel (121) étant plus éloigné de l'une des roues motrices qu'il entraîne que de l'autre, l'arbre de roue (122) associé à la roue la plus éloignée est supporté par un palier intermédiaire (123) et le dispositif d'accouplement (120) est placé au voisinage de ce palier intermédiaire, en ayant son carter (126) relié au boîtier (127) du différentiel et son moyeu (125) à l'arbre de roue.

**24.** Dispositif de transmission suivant la revendication 23, caractérisé en ce que ledit carter (126) est relié au boîtier (127) du différentiel par un arbre tubulaire (128).

FIG.1

FIG.2

FIG.3

FIG.4

FIG.5

EP 0 479 639 A1

FIG.6

FIG.7

FIG.8

FIG.9

FIG.12

FIG.10

EP 0 479 639 A1

FIG.11

EP 0 479 639 A1

FIG.13

Office européen
des brevets

# RAPPORT DE RECHERCHE EUROPEENNE

Numero de la demande

EP    91 40 2513
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 447 911 (ZF) | 1,2,4-7, 13,18 | F16D35/00 |
| Y | | 3,9,11, 15,16, 18,20-22 | |
| A | | 10,12 | |
| | * le document en entier * | | |
| | --- | | |
| Y | DE-A-3 609 418 (ZF) | 3,18,21 | |
| A | * le document en entier * | 1,2,4,5 | |
| | --- | | |
| Y | DE-B-1 288 361 (MAYBACH) | 9,11 | |
| | * le document en entier * | | |
| | --- | | |
| Y | DE-A-3 529 234 (STEYR) | 15,16 | |
| | * le document en entier * | | |
| | --- | | |
| Y | US-A-3 396 605 (WILKINSON) | 20 | |
| | * le document en entier * | | |
| | --- | | |
| Y | FR-A-2 604 232 (GLAENZER-SPICER) | 22 | DOMAINES TECHNIQUES RECHERCHES (Int. Cl.5) |
| A | * le document en entier * | 23,24 | |
| | --- | | |
| X | EP-A-0 157 236 (BMW) | 1,2,4,5, 13,18 | F16D |
| Y | * le document en entier * | 3,9,12, 15,16,19 | F16H |
| | --- | | |
| Y | DE-A-2 209 879 (GKN) | 3,19 | |
| A | * le document en entier * | 1,2,4, 13,18 | |
| | --- | | |
| Y | GB-A-2 135 424 (HONDA) | 9,12 | |
| | * page 2; figures 2,3 * | | |
| | --- | | |
| Y | DE-A-3 604 771 (BMW) | 15,16 | |
| A | * le document en entier * | 3 | |
| | --- | | |
| X | EP-A-0 156 201 (BMW) | 1,2,4,18 | |
| Y | * le document en entier * | 3 | |

Le présent rapport a été établi pour toutes les revendications

| Lieu de la recherche | Date d'achèvement de la recherche | Examinateur |
|---|---|---|
| LA HAYE | 19 DECEMBRE 1991 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

**RAPPORT DE RECHERCHE EUROPEENNE**

Numero de la demande

EP    91 40 2513
Page 2

| Catégorie | Citation du document avec indication, en cas de besoin, des parties pertinentes | Revendication concernée | CLASSEMENT DE LA DEMANDE (Int. Cl.5) |
|---|---|---|---|
| | --- | | |
| Y | DE-A-3 630 974 (STEYR) | 3 | |
| A | * le document en entier * | 1,2,4,5 | |
| | --- | | |
| X | DE-C-3 726 641 (VISCODRIVE) | 1,2,4 | |
| | * le document en entier * | | |
| | --- | | |
| P,X | EP-A-0 391 722 (TOYOTA) 10 Octobre 1990 | 1,2,4 | |
| | * le document en entier * | | |
| | ----- | | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 19 DECEMBRE 1991 | BALDWIN D. R. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P0402)